# EUROPEAN PATENT APPLICATION

(11) **EP 3 974 661 A1**
(43) Date of publication of application: **30.03.2022**
(21) Application number: 20382848.8
(22) Date of filing: 25.09.2020
(51) Int. Cl.: F16B 7/04, A47G 25/06

(54) **ANCHORING ELEMENT, ASSEMBLY AND SYSTEM**

(71) Applicant: Gerox Works, S.L., 08860 Rat Penat (Barcelona) (ES)
(72) Inventor: Gusi Gracia, Carlos Joaquin, 08860 Rat Penat (Barcelona) (ES)
(74) Representative: Gallego Jiménez, José Fernando

(57) **Abstract**

Anchoring element (1) for hanging and connecting objects on pre-walls and / or metal surfaces, without the need for tools, comprising:
- a front face (1a) with a broadly flat geometry intended to rest opposite the wall plane;
- a back face (1b) provided with coupling means (4, 4'), for coupling the anchoring element to a fixing element (3), when the anchoring element is anchored to pre-walls; a hole (5) configured to contain a magnetic element (6), when the anchoring element is anchored to metal surfaces; and projections (7) located in recesses (8) arranged on the periphery of the back face (1b), in such a way that the anchoring element (1) can receive support elements (9), both in the direction from the X and Y axes of the wall plane.

## Description

### Field of the invention

The invention relates to an anchoring element for hanging and connecting objects on pre-walls and / or metal surfaces, without the need for tools. The invention further relates to an anchoring assembly and an anchoring system comprising said anchoring element.

### Background

Different anchoring pieces are known for hanging objects on pre-walls that use methods such as screws or nails to adhere to the wall, generally requiring the use of drills, in many cases representing an impediment or nuisance for the user.

The problem with these anchoring means is that they require an aggressive action on the wall, especially relevant in pre-walls such as plasterboard, wood, cork or the like. This action can deteriorate the gripping wall, which may prevent the pieces from sticking to the wall or create damage to said walls.

Devices that respond to pre-wall gripping requirements are also known, such as the ones described in Utility Model ES1068718U or in patent application WO9602179 A1, which allow fixing of a small hook on the wall by means of two top spikes that leave less impact on the wall.

However, these anchoring devices only have the function of a small hook, they are still difficult to install since they don't have a broadly flat surface to exert pressure on them in order to anchor them to the wall and can cause damage to the fingers, hence a hammer is generally required to complete the installation, and they can easily become detached of the wall as they do not have a bottom reinforcement.

Patent application WO2004079210 discloses an anchoring element with a small hook that is fixed to the wall by means of spikes, a top and a bottom one, with a downwardly curved configuration. In any case, it is an individual anchoring element, not configurable or expandable, which, like the previous devices, is still difficult to install.

Like ways, responding to a less aggressive wall anchoring method, there is also a model similar to those exposed above, for anchoring by means of small spikes, with a downwardly curved configuration that facilitates the installation of the piece, which is carried out with two mutually pivoting elements, as reflected in patent application MX 2017015859 A. However, the downwardly curved configuration of the top spikes, like a hook, generates a wall insertion path coinciding with the trajectory of the extraction forces generated by an object hanging from the anchoring piece, thus facilitating the involuntary detachment of said anchoring piece from the wall.

Said system incorporates the possibility of coupling a hook, or other support elements, of a larger size to the anchoring piece, however, like the aforementioned systems, it does not allow for a great variety of accessories or objects to be anchored to the wall and to be connected together to create modular systems, thus being able to create multiple combinations of accessories anchored to the wall by means of the same anchoring element.

On the other hand, none of the above devices allows the anchoring element to be anchored both on pre-walls and on metal surfaces.

### Summary

In order to avoid the above-mentioned drawbacks, it is an object of the present invention to provide an anchoring element that is easy to install, which allows objects to be hung and connected, without the need for tools, on pre-walls and / or metal surfaces. Said anchoring element is designed to be able to connect different support elements thereto, prepared to fit with said anchoring element, thus being able to create multiple combinations of accessories anchored to the wall, from a simple hook to multiple combinations of the same with other accessories, by means of the same anchoring element.

The anchoring element is characterized by being able to be coupled to a pre-wall fixing element and / or to a magnetic element. In such a way that, the anchoring element can be anchored both on pre-walls (drywalls, plasterboard, wood, cork, etc.) and metal surfaces (refrigerator, metal sheets, etc.).

It is, therefore, another object of the present invention, to provide an anchoring assembly for hanging and connecting together objects on pre-walls and / or metal surfaces comprising said anchoring element and said fixing element or said magnetic element.

The fixing element has particular characteristics that differentiate it from other pre-wall gripping pieces that are found on the market, since it has three spikes, two top and one bottom, with a configuration, like a reverse hook, that allows the insertion into the wall with greater ease and avoids the involuntary detachment of the anchoring element. When the top spikes are inserted into the wall, they form an arch whose center is coincident with the arch formed by the bottom spike, thus allowing for a better wall insertion by following the same insertion path.

The upward curvature of the top insertion spikes generates a wall insertion arch that is opposite to the path generated by the extraction forces of an object hanging from the anchoring assembly, thus creating additional lock and reinforcing the pre-wall anchoring assembly.

The anchoring element allows anchoring of the anchoring assembly to a pre-wall, in a simple way, offering a firm base with a broadly flat surface that allows pressure to be applied thereon without damaging the fingers and without the need for tools to complete the installation.

The anchoring element, by means of projections arranged on the periphery of its back face, allows connection with support elements, making it possible to create accessory networks in both directions of the X and Y axes of the wall plane.

It is, therefore, still another object of the present invention, to provide an anchoring system for hanging and connecting objects together and creating modular, expandable and configurable constructions, on pre-walls and / or metal surfaces, without the need for tools, comprising a plurality of anchoring assemblies and a plurality of support elements.

The anchoring system of the present invention makes it possible to connect together a multitude of accessories (bags, hooks, LED strips, magazine holders, pencils, trays, shelves, etc.) and anchor them to the wall without tools, creating varied sets without the need for auxiliary structures such as panels or grids and can be freely configured and expanded to create multi-purpose accessory sets.

### Brief description of the drawings

To complement the description that is being made and in order to facilitate understanding of the characteristics of the invention, the present specification is accompanied by a set of drawings in which, by way of illustration and not limitation, the following has been represented:
Fig. 1 shows different views of an anchoring element according to a preferred embodiment of the present invention.
Fig. 2 shows different views of a fixing element according to a preferred embodiment of the present invention.
Fig. 3 shows a perspective view of an anchoring assembly comprising the anchoring element of Fig. 1 and the fixing element of Fig. 2 and an anchoring assembly comprising the anchoring element of Fig. 1 and a magnetic element.
Fig. 4 shows a perspective view of the anchoring assembly of Fig. 3 further comprising a support element.
Fig. 5 shows a longitudinal view of a support element according to the present invention.
Fig. 6 shows a detail of a connection profile of the support element of Fig. 4;
Fig. 7 shows different examples of connections between an anchoring element and one or more support elements.
Fig. 8 shows a support element according to another embodiment of the present invention.
Fig. 9 shows an anchoring system comprising a support accessory according to an embodiment of the present invention.
Fig. 10 shows a plan elevation view of an anchoring system according to an embodiment of the present invention.
Fig. 11 shows a perspective view of an anchoring system according to another embodiment of the present invention.
Fig. 12 shows a perspective view of an anchoring system according to another different embodiment of the present invention.
Fig. 13 shows a perspective view of an anchoring system according to another different embodiment of the present invention.
Fig. 14 shows a perspective view of an anchoring system according to another different embodiment of the present invention.
Fig. 15 shows an anchoring system comprising clip elements and injected plastic parts according to an embodiment of the present invention.
Fig. 16 shows a diagram of wall insertion of a fixing element according to an embodiment of the present invention.

### Detailed description of the invention

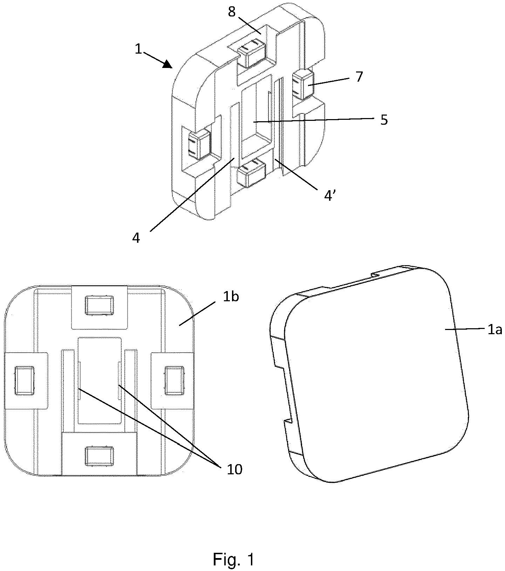

It is an object of the present invention to provide an anchoring element 1, as shown in Fig. 1, for hanging and connecting together objects on pre-walls and / or metal surfaces, without the need for tools, comprising a front face 1a with a broadly flat geometry, intended to rest opposite the wall plane, and a back face 1b.

The broadly flat geometry of the front face 1a of the anchoring element 1 is configured to be able to receive decorative elements 11 having an adhesive face 11a.

The back face 1b is provided with coupling means 4, 4', for coupling the anchoring element 1 to a fixing element 3, when the anchoring element is used on pre-walls, and a hole 5 configured to contain a magnetic element 6, when the anchoring element is used on metal surfaces. In such a way that, the anchoring element allows anchoring both on pre-walls and on metal surfaces.

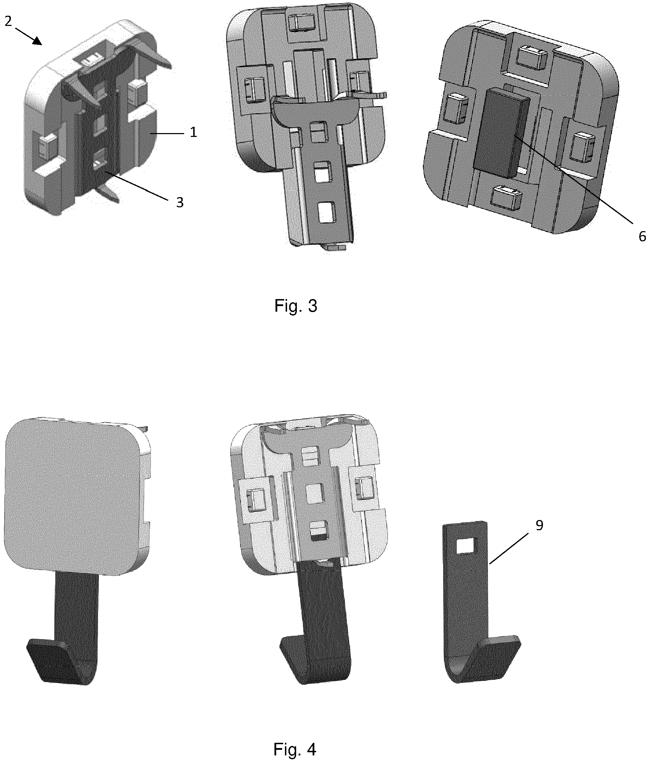

In a preferred embodiment of the present invention, the coupling means 4, 4' are dovetail grooves, such that the anchoring element engages the fixing element 3 in a sliding manner, as shown in Fig. 3.

When the anchoring element 1 is used on metal surfaces, there is no need to couple it to a fixing element 3, but instead a magnetic element 6 is inserted into hole 5 and fixed to the anchoring element 1 by means of a locking system 10.

The magnetic element 6 is fixed in hole 5 by means of the locking system 10, comprising two tabs elastically deformable under pressure, in such a way that they regain their original shape once the magnetic element 6 has been inserted into hole 5.

In a preferred embodiment of the present invention, the anchoring element 1 is made of a plastic material and shaped by injection molding.

In an alternative embodiment of the present invention, it is contemplated that the anchoring element 1 comprises a double-sided adhesive on its back face 1b, in order to be able to anchor the anchoring element 1 to a surface by adhesion.

The back face 1b additionally comprises projections 7 located in recesses 8 arranged on the periphery of the back face 1b, in such a way that the anchoring element can receive support elements 9 both in the direction of the X and Y axes of the wall plane.

In a preferred embodiment of the invention, the anchoring element has a square geometry with round edges, each side of the anchoring element having one projection 7 located in the central part of said side, in such a way that the anchoring element 1 can receive up to four support elements 9, two in the direction of the X axis and two in the direction of the Y axis of the wall plane.

In other embodiments, it is contemplated that the anchoring element 1 has different geometries, i.e. round, oval, rectangular geometry, etc. and it has more than one projection 7 per side or more than four projections distributed along the periphery of the back face of the anchoring element 1.

In a preferred embodiment of the present invention, the projections 7 have a conical and ribbed geometry to allow coupling of the support elements 9 and prevent their detachment.

It is another object of the present invention to provide an anchoring assembly 2, as shown in Fig. 3, for hanging and connecting together objects on pre-walls and / or metal surfaces, without the need for tools, comprising an anchoring element 1 and a fixing element 3 or a magnetic element 6.

In one embodiment of the present invention, as shown in Fig. 4, the anchoring assembly further comprises a support element 9.

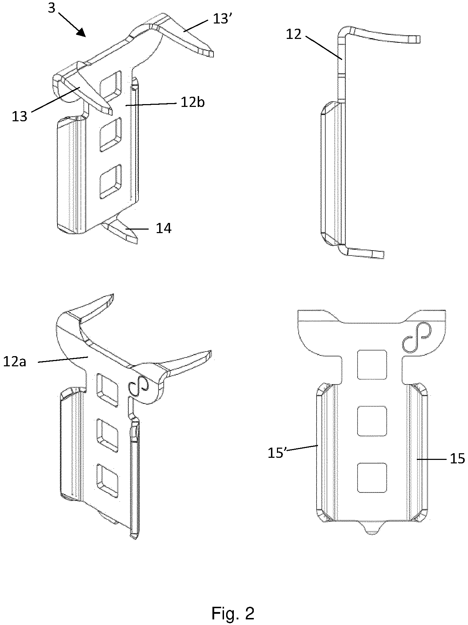

As shown in Fig. 2, the fixing element 3 comprises a flat plate 12 having a front face 12a and a back face 12b intended to rest parallel to the wall plane; two top spikes 13, 13' with a wall insertion extension projecting from the top of plate 12 rearward, relative to front face 12a, and having an upwardly curved configuration; and a bottom spike 14 with a wall insertion extension projecting from the bottom center part of the flat plate 12 rearward, relative to the front face 12a, and in an upwardly curved configuration.

In a preferred embodiment of the invention, the wall insertion extension of the bottom spike 14 is smaller than the wall insertion extension of the top spikes 13, 13'.

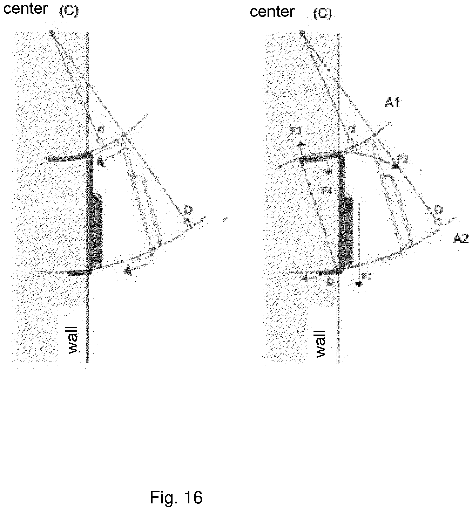

As shown in Fig. 16, the top spikes 13, 13' and the bottom spike 14 form respective wall insertion paths A1, A2 with the same center C, thus allowing for a better wall insertion by following a same insertion path.

By coupling an anchoring element 1 and respective supporting elements 9 on the fixing element 3, a force is produced in vector F1, which pivots about point b and generates a force F2. In order to improve the anchoring system, the two top spikes have an upwardly curved configuration, like a reverse hook, in such a way that when inserted into the wall they create an insertion path A1 that intersects with the path of force F2, generating forces F3 and F4, creating an additional lock and reinforcing the anchoring system of the pre-wall anchoring assembly.

The fixing element 3 additionally comprises receiving means 15, 15' that extend from the sides of the flat plate 12, like wings, in the opposite direction to spikes 13, 13', 14, and are compatible with coupling means 4, 4' to receive the anchoring element 1.

The broadly flat geometry of the front face 1a of the anchoring element 1 makes it possible to have a support surface for inserting the anchoring assembly 2, when it comprises the fixing element 3, into the wall without damaging the fingers when exerting pressure on said surface.

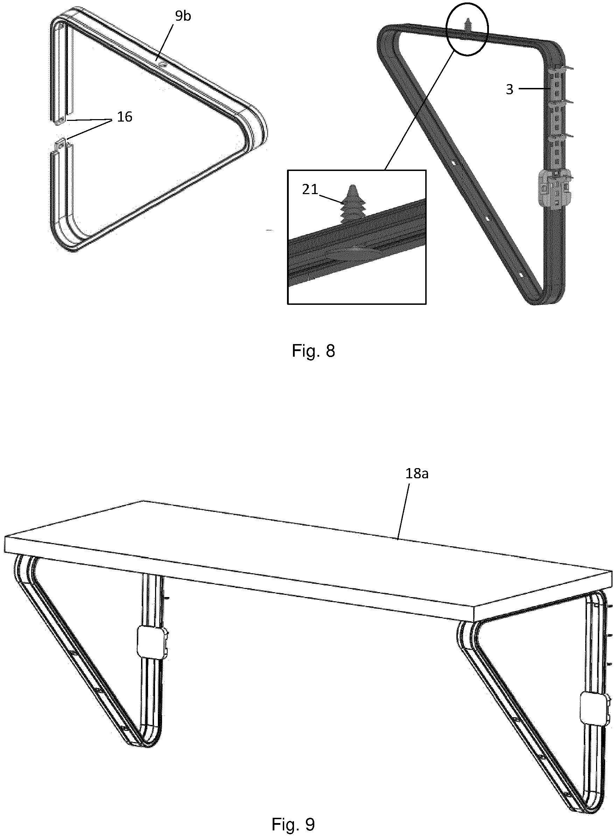

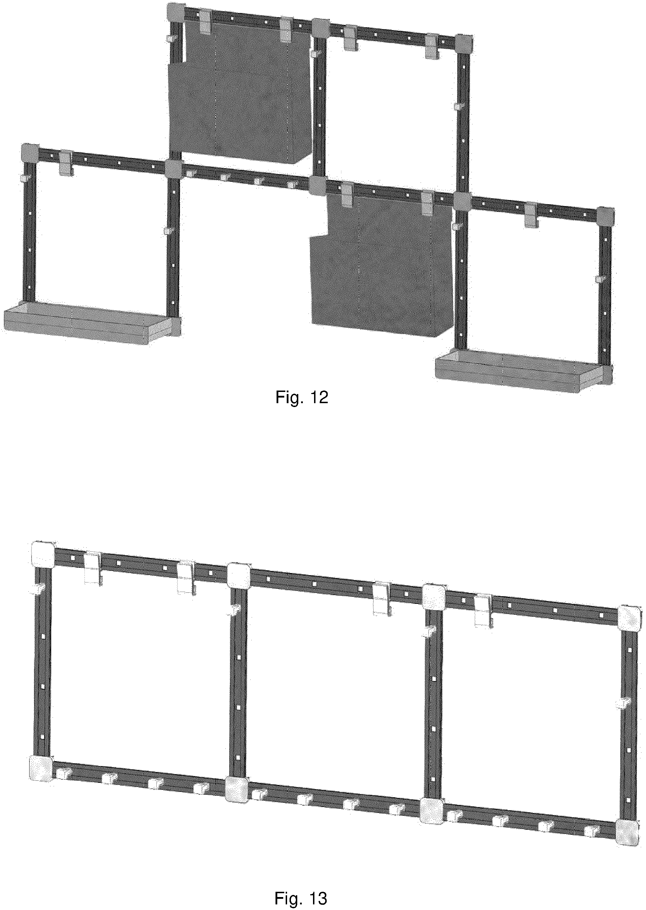

It is still another object of the present invention to provide an anchoring system, as shown in Figs. 9 to 14 for hanging and connecting objects on pre-walls and / or metal surfaces, being able to create modular, configurable and expandable constructions, without the need for tools, comprising a plurality of anchoring assemblies 2 and a plurality of support elements 9.

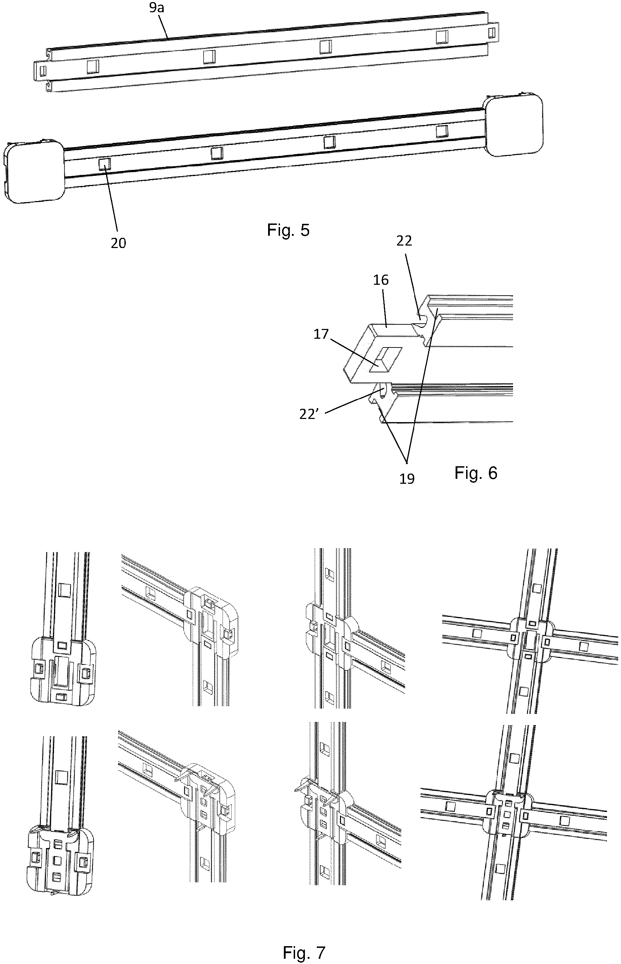

As shown in Fig. 6, the support elements 9 are provided with at least one connection profile 16 compatible with recesses 8 and having a hole 17 compatible with projections 7, in such a way that the at least one connection profile 16 is engaged in a recess 8 of an anchoring element 1.

In a preferred embodiment of the present invention, each anchoring element 1 allows coupling with up to four, that is, one, two, three or four different support elements 9, as shown in Fig. 7, being able to create multiple combinations of support elements 9 anchored to the wall, without tools.

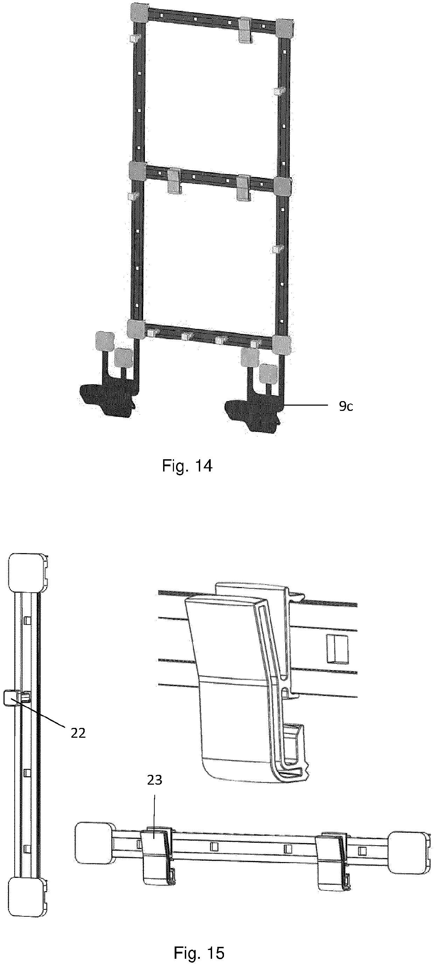

In a preferred embodiment of the invention, the support elements 9 are extruded profiles 9a, as shown in Fig. 5, and / or bent extruded profiles 9b, as shown in Fig. 8, and / or folded metal sheets 9c, as shown in Fig. 14.

In a preferred embodiment, the extruded profiles 9a, 9b are made of aluminum.

In one embodiment of the present invention, the anchoring system additionally comprises support accessories 18, such as, for example, shelves 18a, sacks 18b and / or trays 18c.

The anchoring element 1 is designed to allow coupling with different support elements 9, thus being able to create multiple combinations of accessories anchored to the wall, from a simple hook or a shelf to multiple combinations of the same with other accessories, by means of the same anchoring element 1.

As shown in Fig. 9, in an exemplary embodiment of the present invention, the anchoring system comprises two anchoring assemblies 2 and two support elements 9, each of the two support elements 9 being provided with two connection profiles 16, in such a way that each of the support elements 9 is coupled to two projections 7 of the same anchoring element 1 integral to one of the two anchoring assemblies 2. The anchoring system also comprises a support accessory 18, in this case a shelf 18a. It is contemplated that the system additionally includes a clamping pin 21 to secure shelf 18a to the support elements 9.

In an alternative embodiment it is also contemplated that the system includes complementary fixing elements 3 that can be fixed to the support elements 9 through coupling means 22, 22 ' of the support elements 9, as shown in Fig. 6, compatible with the receiving means 15, 15' of the fixing elements 3, to reinforce the gripping to the wall.

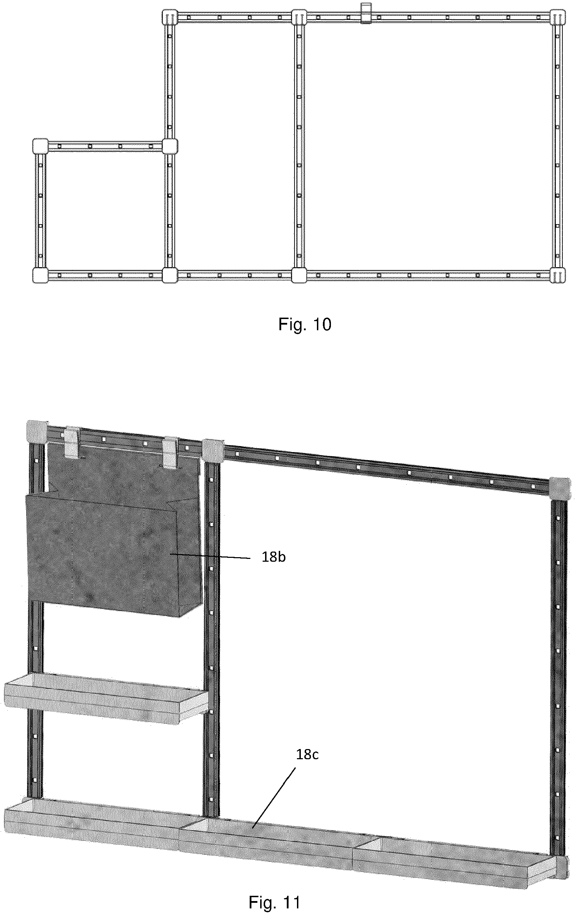

Figs. 10 to 14 show more extensive anchoring systems comprising a plurality of anchoring assemblies 2, a plurality of support elements 9 and a plurality of support accessories 18. Said systems are configurable and expandable according to the future needs of a user.

As shown in Fig. 14, in an embodiment of the present invention, the anchoring system includes a support element 9c provided with three connection profiles 16, in such a way that each of the three connection profiles 16 is coupled to an anchoring assembly 2 by means of a recess 8 of the anchoring element 1 integral to each anchoring assembly 2.

In another preferred embodiment of the present invention, the anchoring system additionally comprises injected plastic parts 22 designed to be pressure-fitted to the support elements 9 by means of holes 20 arranged therein, as shown in Fig. 15.

In another preferred embodiment of the present invention, the anchoring system additionally comprises clip elements 23 designed to slideably join the support elements 9 by means of guides 19 arranged on the sides thereof, and to be movable along said guides 19, as shown in Fig. 6.

Once the nature of the invention has been sufficiently described, as well as some examples of preferred embodiment, it is stated for the appropriate purposes that the materials, shape, and size of the elements described may be modified, as long as this does not imply an alteration of the essential characteristics of the invention that are claimed below.

## Claims

1. Anchoring element (1) for hanging and connecting objects on pre-walls and / or metal surfaces, without the need for tools, comprising:
- a front face (1a) with a broadly flat geometry intended to rest opposite the wall plane;
- a back face (1b) provided with coupling means (4, 4'), for coupling the anchoring element to a fixing element (3), when the anchoring element is anchored to pre-walls; a hole (5) configured to contain a magnetic element (6), when the anchoring element is anchored to metal surfaces; and projections (7) located in recesses (8) arranged on the periphery of the back face (1b), in such a way that the anchoring element (1) can receive support elements (9), both in the direction from the X and Y axes of the wall plane.

2. The anchoring element according to claim 1, wherein the coupling means (4, 4') are dovetail grooves, such that the anchoring element (1) engages the fixing element (3) in a sliding manner.

3. The anchoring element according to previous claims, wherein the projections (7) have a conical and ribbed geometry to allow coupling of the support elements (9) and prevent their detachment.

4. The anchoring element according to previous claims, **characterized in that** it is made of a plastic material and shaped by injection molding.

5. The anchoring element according to previous claims, **characterized in that** it has a locking system (10) to fix said magnetic element (6).

6. Anchoring assembly (2) for hanging and connecting objects on pre-walls and / or metal surfaces, without the need for tools, comprising:
- an anchoring element (1) according to claim 1; and
- a magnetic element (6) or a fixing element (3), said fixing element comprising:
- a flat plate (12) having a front face (12a) and a back face (12b) intended to rest parallel to a wall plane;
- two top spikes (13, 13 ') with a wall insertion extension projecting from the top of plate (12) rearward, relative to the front face (12a), and having an upwardly curved configuration;
- a bottom spike (14) with a wall insertion extension projecting from the bottom central part of the flat plate (12) rearward, relative to the front face (12a), and with an upwardly curved configuration; and
- receiving means (15, 15') that extend from the sides of the flat plate (12), in the opposite direction to the spikes (13, 13', 14), and are compatible with the coupling means (4, 4'), to receive the anchoring element (1).

7. The anchoring assembly according to claim 6, **characterized in that** the top spikes (13,13') and the bottom spike (14) form respective wall insertion arches (A1, A2) with the same center (C), thus allowing for a better wall insertion by following the same insertion path.

8. The anchoring assembly according to claims 6 and 7, **characterized in that** it additionally comprises a support element (9).

9. Anchoring system for hanging and connecting objects on pre-walls and / or metal surfaces together and create modular, configurable and expandable constructions, without the need for tools, comprising:
- a plurality of anchoring assemblies (2) according to claim 5; and
- a plurality of support elements (9).

10. The anchoring system according to claim 9, wherein the support elements (9) comprise at least two connection profiles (16), compatible with the recesses (8) of the anchoring element (1), said connection profiles (16) having a hole (17) compatible with the projections (7) of said anchoring element (1), in such a way that each of the at least two connection profiles (16) are embedded in a recess (8) of an anchoring element (1).

11. The anchoring system according to claims 9 and 10, wherein the support elements (9) are extruded profiles (9a), bent extruded profiles (9b) and / or folded metal sheets (9c).

12. The anchoring system according to claims 9 to 11, **characterized in that** it additionally comprises at least one support accessory (18).

13. The anchoring system according to claim 12, wherein the at least one support accessory (18) is a shelf (18a), a sack (18b) or a tray (18c).

14. The anchoring system according to claims 9 to 13, further comprising injected plastic parts (22) designed to be pressure-fitted to the support elements (9) by means of holes (20) arranged therein.

15. The anchoring system according to claims 9 to 14, further comprising clip elements (23) designed to join the support elements (9) by means of guides (19) arranged on the sides thereof.
